# FASCICULE DE BREVET EUROPEEN

(11) **EP 1 268 894 B1**
(45) Date de publication et mention de la délivrance du brevet: **01.08.2007**
(21) Numéro de dépôt: 01909894.6
(22) Date de dépôt: 23.02.2001
(51) Int. Cl.: D01F 9/12, D01D 5/00

(54) **PROCEDE D'OBTENTION DE FIBRES ET DE RUBANS MACROSCOPIQUES A PARTIR DE PARTICULES COLLO DALES, ET NOTAMMENT DE NANOTUBES DE CARBONE**
VERFAHREN ZUR HERSTELLUNG VON MAKROSKOPISCHEN FASERN UND BÄNDERN AUS KOLLOIDALTEILCHEN, INSBESONDERE AUS KOHLENSTOFFNANORÖHREN
METHOD FOR OBTAINING MACROSCOPIC FIBRES AND STRIPS FROM COLLOIDAL PARTICLES AND IN PARTICULAR CARBON NANOTUBES

(30) Priorité: 23.02.2000 FR 0002272
(43) Date de publication de la demande: 02.01.2003
(73) Titulaire: CENTRE NATIONAL DE LA RECHERCHE SCIENTIFIQUE (CNRS), 75794 Paris Cedex 16 (FR)
(72) Inventeur: Poulin, Philippe, F-33400 Talence (FR); Vigolo, Brigitte, F-33000 Bordeaux (FR); Penicaud, Alain, F-33000 Bordeaux (FR); Coulon, Claude, F-33400 Talence (FR)
(74) Mandataire: Breese, Pierre
(86) Numéro de dépôt international: PCT/FR2001/000544
(87) Numéro de publication internationale: WO 2001/063028

(56) Documents cités:
- WO-A-99/36604
- FR-A- 2 088 130
- GB-A- 1 174 959
- ANDREWS R ET AL: "NANOTUBE COMPOSITE CARBON FIBERS" APPLIED PHYSICS LETTERS,AMERICAN INSTITUTE OF PHYSICS. NEW YORK,US, vol. 75, no. 9, 30 août 1999 (1999-08-30), pages 1329-1331, XP000868231 ISSN: 0003-6951

## Description

La présente invention est relative à un procédé d'obtention ce fibres et rubans macroscopiques à partir de particules colloïdales. Elle vise plus particulièrement un procédé de filage permettant d'obtenir des fibres de nanotubes de carbone.

Selon un autre aspect de l'invention, elle vise des fibres et rubans macroscopiques élaborés à partir de particules colloïdales éventuellement anisotropes.

Compte tenu de leurs propriétés physiques très performantes, les nanotubes de carbone possèdent des applications dans de nombreux domaines, notamment en électronique (selon leur température et leur structure, ils peuvent être conducteurs, semi-conducteurs ou isolants), en mécanique, par exemple pour le renfort de matériaux composites (les nanotubes sont cent fois plus résistants et six fois plus légers que l'acier) et électromécanique (ils peuvent s'allonger ou se contracter par injection de charge).

Malheureusement, à l'heure actuelle, le principal inconvénient à leur utilisation industrielle provient de l'absence de mise en forme macroscopique et de structure contrôlée.

Or la mise en forme de ces nanotubes en fibres ou rubans macroscopiques faciliterait considérablement les manipulations (transport, stockage) et rendrait plus utilisables les nanotubes pour les applications ci-dessus.

Ainsi les fibres de carbone utilisées notamment dans l'industrie des composites, sont obtenues de manière classique par des procédés de filage d'un mélange viscoélastique. Elles sont produites par exemple par étirage d'un polymère viscoélastique ou par étirage direct de brai de carbone chauffé pour être rendu viscoélastique, suivi d'une carbonisation par chauffage. Cette technique, très générale, peut également être appliquée aux matériaux élastiques, au verre, ou aux métaux.

En revanche, ce procédé à haute température ne peut pas être appliqué à des solutions comprenant des particules colloïdales car il risque de provoquer une dégradation des solvants. Il ne peut pas non plus être appliqué à des nanotubes de carbone, l'échauffement de ces derniers entraînant leur dégradation avant d'atteindre un état viscoélastique.

La présente invention vise donc à pallier de tels inconvénients en proposant un procédé d'obtention de fibres et rubans macroscopiques à partir de particules colloïdales, notamment des nanotubes de carbone, dispersées dans une solution. Elle vise également des fibres et rubans ainsi obtenus.

A cet effet, le procédé d'obtention de fibres et de rubans à partir de particules colloïdales selon l'invention, se caractérise en ce que :
1) on disperse lesdites particules dans un solvant à l'aide éventuellement d'un agent tensioactif,
2) on injecte la dispersion à travers au moins un orifice débouchant dans un écoulement d'une solution externe, de préférence, de viscosité supérieure à celle de ladite dispersion, les viscosités étant mesurées dans les mêmes conditions de température et de pression, de manière à provoquer une agrégation desdites particules en fibres ou rubans en déstabilisant les dispersions de particules et un éventuel alignement desdites particules.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue en perspective et en élévation d'un exemple schématique de dispositif expérimental de mise en oeuvre de la deuxième étape du procédé selon l'invention ;
- la figure 2 est une succession de photographies montrant la formation d'un noeud à partir d'une fibre de nanotubes enchevêtrés obtenue par le procédé selon l'invention ;
- les figures 3a, 3b et 3c représentent des photographies d'un ruban de nanotubes de carbone obtenus par le procédé selon l'invention et observé entre un polariseur et un analyseur croisés par microscopie optique.

Selon un mode préféré de réalisation de l'invention, le procédé d'obtention de fibres et rubans macroscopiques à partir de particules colloïdales comporte au moins deux étapes.

Une première étape consiste à disperser les particules colloïdales, et notamment les nanotubes, dans une solution aqueuse ou organique. Pour ce faire, les particules de nature hydrophobe sont dispersées dans un solvant tel que l'eau ou un alcool comme l'éthanol, éventuellement à l'aide d'un agent tensioactif classiquement utilisé pour disperser des particules hydrophobes dans un tel solvant. Lorsqu'on utilise un agent tensioactif, les particules étant recouvertes par celui-ci, leur floculation peut être évitée et leur dispersion est donc stable. Dans le cas où le solvant utilisé est de l'eau, une telle dispersion peut être obtenue avec différents agents tensioactifs moléculaires ou polymères, anioniques, cationiques ou neutres tels que par exemple, du dodécyl sulfate de sodium (SDS), des esters alkylaryliques ou du bromure de tétradécyltriméthylammonium. Selon les caractéristiques des agents utilisés, leur concentration varie de quelques millièmes de % à quelques %.

Les dispersions initiales de particules colloïdales, par exemple de nanotubes, doivent être le plus homogène possible. L'homogénéité peut être testée de façon simple et routinière par microscopie optique, la présence d'inhomogénéités, résultant de la présence d'agrégats de particules étant facilement décelable optiquement.

Les rubans ou fibres formés avec des dispersions plus diluées en particules colloïdales sont très fragiles et difficilement manipulables pour être transformés en fils. Il est aussi difficile de faire des rubans et des fibres avec des suspensions plus concentrées car il est difficile d'obtenir des dispersions homogènes concentrées. Cependant, il est toujours préférable d'utiliser les suspensions les plus concentrées possible tout en essayant de garder les suspensions homogènes.

Avec des nanotubes bruts synthétisés par arc électrique, il est avantageux d'utiliser par exemple les concentrations massiques suivantes pour faire les dispersions initiales :
- solvant : eau
- entre 0.3 et 0.5% en nanotubes
- entre 1 et 1.5% en dispersant en SDS.

Avec des nanotubes préparés par le procédé HiPcc, qui sont plus facilement utilisables que les nanotubes synthétisés à l'arc électrique, on peut retenir des concentrations plus basses, par exemple, jusqu'à 0.1% massique.

De façon générale, les dispersions seront préférentiellement formulées en utilisant un homogénéisateur à ultrasons. Il est beaucoup plus efficace et rapide d'utiliser un homogénéisateur avec une sonde directement plongée dans la dispersion plutôt que d'utiliser un bain à ultrasons. La puissance des bains à ultrasons est habituellement trop faible pour obtenir des dispersions homogènes et relativement concentrées en particules.

La deuxième étape du procédé selon l'invention consiste à injecter les dispersions aqueuses ou organiques de particules obtenues après la première étape à travers au moins un orifice débouchant dans l'écoulement laminaire d'une solution externe dont la viscosité doit, de préférence, être supérieure à celle desdites dispersions, les viscosités étant mesurées dans les mêmes conditions de température et de pression, afin de provoquer en raison des forces de cisaillement l'alignement des particules colloïdales dans le sens imposé initialement par l'écoulement de ladite solution externe. Pour parvenir à ce résultat, on peut utiliser, comme viscosifiant de la solution externe, un polymère qui peut être par exemple un polyol ou un polyalcool (du polyvinyl alcool, de l'alginate ou de la cellulose, par exemple) ou un minéral (de l'argile, par exemple).

De plus, cette solution externe doit de préférence contenir des agents chimiques permettant d'induire la coagulation (ou floculation) des particules dispersées en particulier des polymères susceptibles de donner lieu à des phénomènes de pontage.

Ainsi, lorsque les dispersions aqueuses ou organiques de particules contenant l'agent tensioactif sont injectées à travers ledit orifice dans la solution externe, des molécules adsorbées dudit agent tensioactif peuvent être déplacées par le viscosifiant ou un agent floculant de la solution externe; les particules ne sont alors plus stabilisées et s'agrègent donc à la sortie de l'orifice pour former des rubans ou des fibres dont la section droite est fonction de la section dudit orifice utilisé. Plus simplement, l'agrégation des particules peut également être induite par la désorption de l'agent tensioactif. En outre, même si les agents tensioactifs restent adsorbés, lesdites particules peuvent s'agréger en présence d'un agent floculant.

Plusieurs agents floculants peuvent être utilisés : du polyvinyl alcool, du chitosan, des polyélectrolytes faiblement chargés, par exemple un copolymère d'acrylamide et d'acide acrylique, (qui jouent aussi le rôle de viscosifiant), des sels (Na+Cl-, K+Cl-) ou un agent tensioactif neutre ou de charge opposée à celle de l'agent utilisé pour disperser les particules dans la première étape du procédé, si celui-ci est ionique.

On utilise en général un PVA de fort poids moléculaire (de l'ordre de 100000 g/mol ou plus) pour donner une meilleure cohésion au ruban ou à la fibre. Avantageusement, on utilise un PVA hydrosoluble de poids moléculaire supérieur à 10000 et notamment compris entre 10 000 et 200 000. Cette efficacité accrue avec la taille du polymère semble provenir du fait que l'agrégation des particules est due à un phénomène "dit" de pontage des particules par le PVA.

Les PVA de bas poids moléculaire (de l'ordre de 10000-15000g/mol) se dissolvent plus vite et peuvent être utilisés à plus haute concentration car il viscosifient moins les solutions.

Ils ont l'avantage de s'adsorber rapidement et d'être plus facilement désorbables que les polymères de haut poids moléculaire. Cependant, les rubans et fibres sont un peu plus fragiles, ce qui s'expliquerait par un pontage moins efficace.

Un filtrage des solutions de PVA peut s'avérer nécessaire si celles-ci ne sont pas homogènes.

Selon une caractéristique avantageuse de l'invention, les fibres ou rubans obtenus peuvent être lavés à l'aide d'un produit de rinçage à l'issue de cette deuxième étape de manière à désorber complètement la solution externe et les agents de dispersion. Notamment, cette étape peut consister en des séries de rinçage à l'eau pure.

Par ailleurs, la densité des fibres et rubans peut être contrôlée par la concentration de la dispersion initiale des particules. Par exemple, dans la cas des nanotubes de carbone, ces fractions massiques sont typiquement inférieures à quelques %.

Selon une autre caractéristique avantageuse de l'invention, le procédé comporte une dernière étape qui consiste à densifier les fibres et rubans macroscopiques.

La mise en oeuvre de cette dernière étape consiste donc à tirer lentement hors du produit de rinçage (notamment de l'eau) les fibres ou rubans. Ainsi, une contraction capillaire se produit lorsque ces fibres ou rubans se trouvent hors du solvant, et cette contraction entraîne une première densification qui est ensuite accentuée par l'évaporation du solvant.

On décrira maintenant les différents paramètres mis en oeuvre au cours du procédé selon l'invention.

La première étape consiste essentiellement à mélanger intimement des particules colloïdales et un solvant (aqueux ou organique) afin d'obtenir une solution possédant les propriétés d'une dispersion.

Pour répondre aux différentes contraintes de la deuxième étape du procédé, plusieurs types de dispositif peuvent convenir :
- soit une installation fonctionnant selon un mode discontinu,
- soit, au contraire, une installation fonctionnant en régime permanent.

Ainsi, selon une première famille d'installations, il s'agit d'un réacteur ou d'une enceinte permettant de contenir la solution externe qui est mise en mouvement, notamment en rotation, par un moteur (plaque tournante, par exemple). Cette enceinte peut être également munie d'une double enveloppe permettant la circulation d'un fluide caloporteur, en vue de modifier la température de la solution externe et donc ses paramètres physico-chimiques (viscosité).

En contrôlant la vitesse de rotation du moteur, on confère au milieu des conditions hydrauliques optimales en termes notamment de vitesse et de débit, qui permettent d'assurer l'entraînement de la dispersion aqueuse ou organique débouchant au travers de la pluralité d'orifices placés dans les veines en circulation de la solution externe.

Les orifices, dont la section droite peut être de profil varié (rectangulaire, cylindrique, carrée, conique), sont reliés par l'intermédiaire de conduites à un autre réservoir contenant la dispersion aqueuse ou organique. Par ailleurs, on prévoit d'interposer, sur le circuit d'alimentation entre le réservoir tampon contenant ladite dispersion et le réservoir de séparation dans la solution externe, des pompes volumétriques et/ou centrifuges afin de conférer à la dispersion (aqueuse ou organique), selon les paramètres de fonctionnement des pompes (vitesse de rotation, pression de refoulement, débit) des conditions hydrauliques optimales.

Dans une installation fonctionnant en régime permanent, les caractéristiques du circuit d'alimentation de la dispersion, sont identiques à celles d'une installation fonctionnant selon un mode discontinu. Cette installation, connue en soi, peut avoir les caractéristiques de celle utilisée dans l'industrie textile ou pour le filage des polymères.

Par contre, l'enceinte contenant la solution externe est pourvue d'orifices d'entrée et de sortie au travers desquels est introduite puis évacuée la solution externe, celle-ci étant amenée à des conditions définies de circulation et donc d'entraînement à l'égard de la dispersion, éventuellement par l'intermédiaire d'un circuit de mise en pression (pompe, bac tampon) et par un circuit de reprise comportant éventuellement des pompes ou des circulateurs.

Bien entendu, l'ensemble de ces installations, fonctionnant tant en régime continu que discontinu, peut être piloté par un automate ou par une unité de conduite informatisée de procédé afin que l'utilisateur puisse disposer des informations relatives au procédé de séparation, en vue d'obtenir les conditions optimales de fonctionnement.

Ainsi, et de manière plus générale, plus la solution externe possède une viscosité importante par rapport à celle de la dispersion aqueuse ou organique (dans les mêmes conditions de température et de pression), plus les dimensions de l'orifice calibré sont petites et plus la vitesse d'écoulement de ladite solution externe est importante, plus les forces de cisaillement provoquées sont fortes et plus prononcé est l'alignement des particules. Par exemple, un orifice fin avec une solution externe visqueuse s'écoulant à haute vitesse donne des structures anisotropes. Inversement, un orifice de section droite importante avec une solution externe peu visqueuse s'écoulant lentement donne des fibres et des rubans avec des particules peu ou pas alignées.

Il est souhaitable lors de cette étape de rester dans des conditions d'écoulement laminaire. Des écoulements trop rapides et turbulents ne permettent pas l'obtention de fibres ou rubans longs et homogènes.

Des solutions aqueuses de polyvinyl alcool (PVA) sont très efficaces pour déstabiliser les suspensions de particules et provoquer leur agrégation. De plus, le PVA est un polymère qui viscosifie fortement la solution, facilitant ainsi l'obtention d'écoulements laminaires.

Les tubes d'injection de la dispersion de particules les plus facilement disponibles sont des cylindres ou des aiguilles. Il est possible d'utiliser des tubes dont le diamètre est compris entre 0.5 et 1.0 mm. On choisira préférentiellement des tubes dont les parois sont fines pour ne pas provoquer de turbulences lorsque la solution de PVA et de la dispersion de particules se rencontrent.

Préférentiellement, dans le cas des nanotubes synthétisés par arc électrique dont les dispersions sont injectées par un tube cylindrique de diamètre 0.7 mm, on utilisera un débit d'injection compris entre 0.8 et 2.5 cm³/min et une vitesse d'écoulement de la solution de PVA au niveau de l'injection des nanotubes comprise entre 5 et 30 m/min.

Un bas débit d'injection et une forte vitesse d'écoulement de la solution de PVA entraînent de forts cisaillements qui étirent le ruban ou la fibre. En conséquence, le ruban ou la fibre est plus fin et l'alignement des nanotubes plus prononcé. Des cisaillements trop forts ont cependant l'inconvénient de rendre les rubans ou fibres plus fragiles car plus fins. De plus, il est important de ne pas utiliser des écoulement trop rapides pour ne pas rentrer dans des régimes turbulents.

Un fort débit d'injection et une faible vitesse d'écoulement conduisent à des rubans ou fibres plus épais et donc plus solides. Ces conditions facilitent donc la fabrication de fibres. Cependant, ces conditions ne favorisent pas l'alignement des nanotubes dans le ruban ou la fibre.

Des vitesses supérieures peuvent être utilisées pour les nanotubes HiPco tout en conservant une bonne tenue mécanique des rubans ou fibres.

Enfin, le procédé selon l'invention peut être appliqué aux particules colloïdales en général, et plus particulièrement aux particules anisotropes (par exemple, nanotubes de carbone, sulfure de tungstène, nitrure de bore, plaquettes d'argile, whiskers de cellulose, whiskers de carbure de silicium).

En ce qui concerne l'étape de densification des rubans ou des fibres, lorsque le ruban ou la fibre est extrait verticalement de l'eau, il aura tendance à sécher plus vite s'il est tiré assez rapidement. Ceci permet à l'eau contenue dans le ruban ou la fibre d'être amenée plus haut. En conséquence, le drainage et le séchage qui suivent sont les plus rapides.

Cependant, l'extraction doit être suffisamment lente pour ne pas soumettre le ruban ou la fibre à des fortes tension qui pourraient le rompre.

Les vitesses maximales d'extraction sont très variable selon la taille et la qualité des rubans ou des fibres et la nature des particules. Si le temps n'est pas une contrainte, il est alors préférable de faire l'extraction lentement pour ne pas risquer de rompre le ruban ou la fibre. Les faibles tensions qui en résultent ne sont pas optimales pour favoriser l'alignement des particules, cependant, d'autres opérations sont possibles pour favoriser cet alignement dans les rubans et les fibres. Il est également possible de transférer les rubans ou fibres rincées dans des solvants plus volatiles que l'eau (alcool ou acétone par exemple de façon à obtenir des séchages plus rapides lors de l'extraction.

Les opérations de rinçage et de lavage à l'eau pure ne permettent pas de désorber dans des délais raisonnables (quelques jours) les plus grosses molécules de floculant par exemple de PVA. En conséquence, il reste du floculant dans les rubans ou les fibres finales. Ceci a une conséquence importante sur les rubans ou les fibres formés. Les rubans ou les fibres regonflent partiellement lorsqu'ils sont réintroduits dans l'eau. Ils s'allongent spontanément de plusieurs et leur diamètre peut doubler.

Les effets par exemple du PVA (ou d'autres floculants) peuvent être évités en effectuant des recuits à haute température (supérieure à 400°C) qui dégradent le PVA.

Il est aussi possible d'effectuer un recuit du ruban ou de la fibre à température modéré de façon à faire fondre le viscosifiant, par exemple le PVA, sans le dégrader (température inférieure à 300°C). Un étirage de la fibre dans ces conditions améliore également l'alignement des particules.

Avantageusement, ces recuits peuvent s'accompagner d'un rajout de polymère et/ou de plastifiant. Cet ajout à chaud permet en outre d'obtenir une fibre ou un ruban gainé.

De façon plus générale, la structure et les propriétés des rubans ou des fibres peuvent être modifiées par des actions mécaniques (tension et/ou torsion notamment) exercées sur ceux-ci. Ces opérations seront préférentiellement réalisées sur des objets moins cassants que la fibre directement obtenue après rinçage et séchage. Ces opérations peuvent se faire facilement sur le ruban ou la fibre initiale, en présence d'élastomère ou de polymère fondu à haute température ou pendant le recuit.

L'opération de condensation et de séchage du ruban ou fibre permet en outre une séparation des particules colloïdales et des impuretés présentes. Les impuretés de type carbone amorphe ou graphite tendent à former une enveloppe externe autour d'un cylindre majoritairement constitué de nanotubes par exemple.

Ce phénomène peut être utilisé pour la réalisation de nouveaux matériaux. Il est possible d'ajouter sciemment des particules microniques ou nanométriques dans la solution externe contenant le ruban ou la fibre. Ainsi ces particules sont entraînées lors de l'étirage du ruban ou de la fibre pour former le ruban ou la fibre finale. Les particules se comportant comme les impuretés carbonées, elles forment une enveloppe externe autour du ruban ou de la fibre de particules colloïdales. Un tel phénomène peut être par exemple être mis à profit pour faire de fines enveloppes de polymère isolant autour des rubans ou des fibres de particules colloïdales, en utilisant, par exemple, des particules de latex.

Des enveloppes de différentes nature peuvent être obtenues avec d'autres types de particules sur tout type de rubans ou de fibres selon l'invention.

La séparation particule/ruban ou fibre semble provenir du drainage latéral du solvant lors de l'extraction et étirage du ruban ou de la fibre. Lorsque le ruban ou la fibre est extrait du solvant, le drainage entraîne les particules sur leur périphérie. En se concentrant à la périphérie les particules forment une enveloppe externe autour du coeur du ruban ou de la fibre. Ce phénomène est observé dans n'importe quel système qui contient un ruban ou une fibre formé de particules ou de polymères en présence d'autres particules, de formes éventuellement différences, et pas ou peu liées aux particules ou polymères qui forment la fibre. L'absence ou la faiblesse des liens entre les particules et le ruban ou la fibre permettra au drainage de séparer les différents constituants et d'aboutir à un ruban ou une fibre formé d'un coeur et d'une enveloppe de natures différentes.

On obtient alors des fibres ou des rubans comportant une enveloppe formée par le séchage périphérique, autour desdites fibres ou rubans, de particules microniques ou nanométriques.

On décrira maintenant un exemple schématique de dispositif expérimental pouvant mettre en oeuvre cette deuxième étape du procédé à partir d'une solution de nanotubes de carbone dispersés dans de l'eau à la première étape.

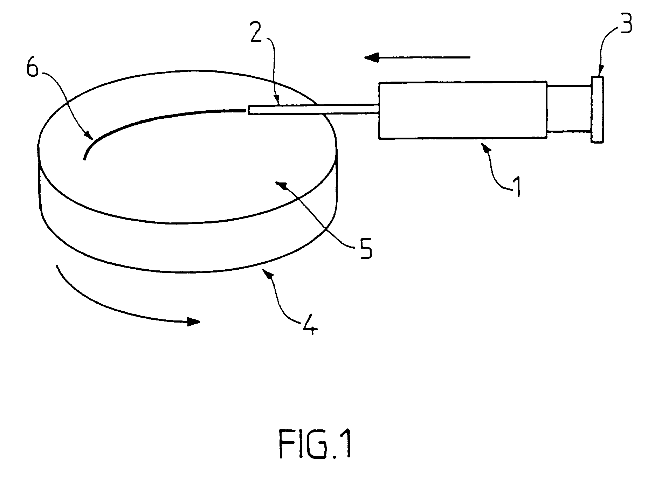

Comme représenté sur la figure 1, celui-ci comporte notamment une seringue 1 ou équivalent dans laquelle est placée la solution aqueuse de nanotubes dispersés à la première étape. Un capillaire 2 de section très plate fixé sur la seringue permet l'éjection de cette solution par pression sur un embout 3 de ladite seringue dans un récipient cylindrique 4 prévu à cet effet. Le débit d'injection est compris entre quelques dixièmes de cm3 par minute à quelques cm3 par minute.

Le récipient cylindrique 4, dont les bords sont assez plats, est fixé sur une plaque (non représentée) animée d'un mouvement de rotation, dont la vitesse varie de quelques dizaines à quelques centaines de tours par minute. L'extrémité de sortie du capillaire 2 trempe dans une solution externe 5 (de préférence de forte viscosité) contenue dans ledit récipient. Plus particulièrement, cette extrémité de sortie dudit capillaire est placée tangentiellement au récipient 4, hors de son axe de rotation. La solution de dispersion de nanotubes de faible viscosité est alors entraînée sous l'effet des forces de cisaillement à la sortie du capillaire par la solution 5 provoquant l'alignement des nanotubes dans le sens de la vitesse du fluide.

En effet, lorsque la solution de nanotubes dispersés contenant l'agent tensioactif est injectée par la seringue 1 au travers du capillaire 2 dans la solution visqueuse 5, les molécules de l'agent tensioactif sont déplacées par le viscosifiant de la solution 5. De plus, comme les nanotubes ne sont pas stabilisés par le floculant de la solution externe 5, ils s'agrègent alors à la sortie du capillaire 2 pour former des rubans ou des fibres 6 selon la section dudit capillaire utilisé.

On décrira maintenant les caractéristiques des fibres et rubans macroscopiques selon l'invention obtenus à partir de particules colloïdales éventuellement anisotropes, et plus particulièrement à partir de nanotubes de carbone.

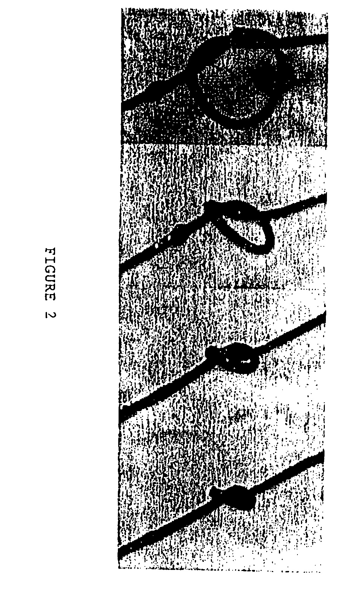

Ces fibres et rubans de carbone sont constitués de nanotubes enchevêtrés. Cette structure confère à ces fibres beaucoup de souplesse tout en préservant une bonne tenue mécanique à la traction du fait de l'organisation du carbone sous forme de cylindres graphitiques dans les nanotubes. Par exemple, comme représenté sur la figure 2, ces fibres peuvent être fortement courbées de façon à faire des noeuds ou encore à être tissées.

De plus, cas fibres sont extrêmement fines et denses. Par exemple, on peut obtenir des fibres de longueur variable, de diamètre allant par exemple de 1 à 100 microns et dont la densité peut atteindre environ 1,5 g / cm3, densité proche de celle théoriquement attendue pour un empilement compact de nanotubes (1,3 g / cm3).

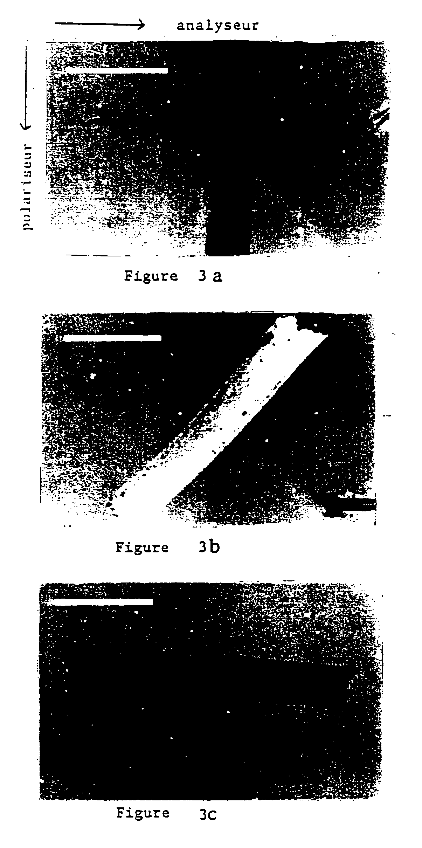

En outre, les fibres et rubans obtenus peuvent avoir une structure anisotrope dans lesquelles les nanotubes auraient une orientation privilégiée. Cette orientation est un paramètre important pour amplifier les réponses électriques et mécaniques d'un matériau donné. Cette anisotropie de structure peut être testée par microscopie optique entre polariseurs croisés. Ainsi, les figures 3a, 3b et 3c montrent clairement que l'intensité transmise par le ruban dépend de son orientation par rapport aux axes des polariseurs.

Sur les photographies des figures 3a à 3c, les axes du polariseur et de l'analyseur sont respectivement les axes verticaux et horizontaux. Par exemple, sur la figure 3a, le ruban est parallèle au polariseur et la lumière ne passe pas. Il en est de même pour la figure 3c où le ruban est parallèle à l'analyseur. Par contre, lorsque le ruban est incliné de 45° par rapport au polariseur et à l'analyseur (figure 3b), celui-ci laisse passer une partie de la lumière. Ceci reflète l'alignement préférentiel des nanotubes de carbone le long de l'axe principal du ruban c'est à dire dans le sens imposé initialement par l'écoulement de la solution externe.

Il est également possible d'obtenir des fibres ou des rubans dont les nanotubes sont peu ou pas alignés, par exemple le long de l'axe principal desdites fibres ou desdits rubans. Pour ce faire, la solution externe utilisée lors de la deuxième étape du procédé selon l'invention doit être peu visqueuse par rapport à la dispersion aqueuse des nanotubes, dans les mêmes conditions de température et de pression, sa vitesse d'écoulement doit être lente et l'orifice d'extrusion large.

En vue d'obtenir un produis final possédant des propriétés mécaniques et électriques améliorées par rapport à l'art antérieur, on pourra utiliser dans la dispersion de particules soit des nanotubes de carbone dits "monoparoi" (c'est à dire composés d'un seul cylindre graphitique), soit des nanotubes de carbone dits "multiparoi" (qui sont composés de plusieurs cylindres concentriques de graphite); les nanotubes "monoparoi" possédant des propriétés mécaniques et électriques plus performantes que celles des nanotubes "multiparoi" mais leur obtention est actuellement plus coûteuse.

Selon une autre caractéristique avantageuse de l'invention, les nanotubes de carbone utilisés dans la dispersion sont chimiquement modifiés par des greffes de groupes moléculaires, par exemple des groupes polyéthyl glycol ou des groupes acides. De telles greffes permettant d'accroître les liaisons entre les fibres ou rubans obtenus (liaisons de type Van der Waals, hydrophobes ou hydrogène), ont pour avantage de renforcer des matériaux composés de ces fibres ou rubans.

Les fibres de rubans selon l'invention présentent une porosité permettant l'introduction dans ces pores de particules, comme par exemple du carbone ou des polymères. Ces introductions de particules assurent en outre pour la fibre une meilleure cohésion et une meilleure résistance aux contraintes mécaniques.

Selon encore une autre caractéristique avantageuse de l'invention, les fibres obtenues à partir de nanotubes de carbone sont utilisées au renfort des matériaux, notamment des matériaux composites et des câbles. En effet, ces fibres ont les qualités du carbone classique (résistance thermique et chimique, solidité des liaisons atomiques dans les plans graphitiques) tout en étant moins fragiles à la torsion. Ainsi, il est envisageable de faire des composites plus souples voire des câbles ou des textiles uniquement à base de nanotubes de carbone.

Selon encore une autre caractéristique avantageuse de l'invention, les fibres et rubans obtenus à partir de nanotubes de carbone sont utilisés comme conducteurs, semi-conducteurs ou isolants selon leur température et leur structure dans le domaine de l'électronique et de la micro-électronique.

Selon encore une autre caractéristique avantageuse de l'invention, les fibres et rubans obtenus à partir de nanotubes de carbone sont utilisés comme systèmes d'émission d'électrons par les nanotubes (système d'affichages, par exemple).

Selon encore une autre caractéristique avantageuse de l'invention, les fibres et rubans obtenus à partir de nanotubes de carbone sont utilisés comme muscles artificiels ou actionneurs électromécanique pour divers systèmes mécaniques. En effet, les films de nanotubes de carbone dits "monoparoi" orientés aléatoirement subissent des déformations mécaniques sous des effets électriques, déformations qui sont amplifiées avec des systèmes alignés. De manière plus générale, ces fibres ou rubans peuvent être utilisés pour des dispositifs permettant de transformer de l'énergie électrique en énergie mécanique (ou inversement).

On peut également envisager des applications de ces fibres et rubans dans des dispositifs optiques ou électro-optiques (électrodiffusion, limitation optique), comme catalyseurs ou supports de catalyseurs dans des réactions chimiques, comme électrodes pour l'électrochimie, comme stockage d'hydrogène des systèmes de batteries (notamment pour des fibres élaborées à partir de nanotubes de carbone), comme pointe pour la microscopie à champ proche (microscopies à effet tunnel et à force atomique), comme membranes filtres, comme détecteurs chimiques (la résistance électrique des fibres de carbone varie en fonction de l'environnement chimique), ou encore dans des utilisations pour l'élaboration de biomatériaux (prothèses, tendons, ligaments).

Enfin, il est possible d'utiliser les fibres ou rubans selon l'invention comme convertisseurs d'énergie mécanique en énergie électrique et réciproquement. En effet, une contrainte mécanique sur ces fibres ou rubans provoque l'apparition de charges électriques sur ceux-ci et les fibres ou rubans se déforment sous des effets électriques. Des exemples d'utilisations sont des capteurs de contraintes mécaniques, des capteurs de sons, des capteurs d'ultrasons...

De même, on peut envisager l'utilisation des fibres ou rubans selon l'invention peur la fabrication de détecteurs électrochimiques et/ou d'électrodes.

La présente invention telle que décrite précédemment offre de multiples avantages; en particulier, un tel procédé permet d'obtenir des fibres à partir de particules comme les nanotubes de carbone ou de façon générale, à partir de particules dispersées dans une solution.

## Revendications

1. - Procédé d'obtention de fibres et de rubans à partir de particules colloïdales, **caractérisé en ce que** :
1) on disperse lesdites particules dans un solvant à l'aide éventuellement d'un agent tensioactif,
2) on injecte la dispersion obtenue à travers au moins un orifice débouchant dans un écoulement d'une solution externe, de préférence, de viscosité supérieure à celle de ladite dispersion, les viscosités étant mesurées dans les mêmes conditions de température et de pression, de manière à provoquer une agrégation desdites particules en fibres ou rubans en déstabilisant les dispersions de particules et un éventuel alignement desdites particules.

2. - Procédé selon la revendication 1, **caractérisé en ce qu'**on disperse lesdites particules dans un solvant aqueux ou organique à l'aide d'un agent tensioactif moléculaire ou polymère, anionique, cationique ou neutre.

3. - Procédé selon la revendication 1 ou 2, **caractérisé en ce que** la solution externe comprend un agent viscosifiant choisi parmi un polymère tel qu'un polyol ou un polyalcool, notamment du polyvinylalcool ou de la cellulose, ou un minéral comme l'argile.

4. - Procédé selon la revendication 3, **caractérisé en ce qu'**on ajoute un agent floculant à la solution externe, cet agent étant choisi parmi un polymère susceptible de donner lieu à des phénomènes de pontage, un sel ou un agent tensioactif neutre ou de charge opposée à celle de l'agent utilisé pour disperser lesdites particules, si celui-ci est ionique.

5. - Procédé selon la revendication 4, **caractérisé en ce que** ledit polymère est constitué par du polyvinyl alcool.

6. - Procédé selon la revendication 5, **caractérisé en ce que** le polyvinyl alcool a un poids moléculaire supérieur à 10000 et notamment compris entre 10 000 et 200 000.

7. - Procédé selon l'une quelconque des revendications précédentes, **caractérisé en ce qu'**on densifie lesdites fibres ou rubans par contraction capillaire et/ou on lave lesdites fibres ou rubans obtenus à l'aide d'un produit de rinçage de façon à désorber ladite solution externe et/ou ledit agent tensioactif.

8. - Procédé selon la revendication 7, **caractérisé en ce que** lesdites fibres ou rubans sont extraits verticalement du produit de rinçage.

9. - Procédé selon la revendication 7, **caractérisé en ce que** l'on effectue un recuit desdites fibres ou rubans à haute température, notamment à une température supérieure à 400°C, ou à température modérée, notamment à une température inférieure à 300°C.

10. - Procédé selon l'une des revendications 7 ou 8, **caractérisé en ce que** lesdites fibres ou rubans subissent des actions mécaniques pendant lesdits recuits avec éventuellement un ajout de polymère et/ou de plastifiant.

11. - Procédé selon l'une des revendications précédentes, **caractérisé en ce que** la solution externe comporte des particules microniques ou nanométriques pour former une enveloppe externe autour desdites fibres ou rubans.

12. - Procédé selon l'une quelconque des revendications précédentes, **caractérisé en ce qu'**on injecte ladite solution de dispersion à travers au moins un orifice ayant notamment une section droite de forme correspondant à celle désirée pour les fibres ou rubans.

13. Procédé selon l'une quelconque des revendications précédentes, **caractérisé en ce qu'**on met en oeuvre comme particules colloïdales des nanotubes, et notamment des nanotubes de carbone.

14. - Fibres et rubans, **caractérisés en ce qu'**ils sont constitués de nanotubes de carbone en tant que particules colloïdales.

15. - Fibres et rubans selon la revendication 14, **caractérisés en ce qu'**ils présentent une structure anisotrope telle que mise en évidence par microscopie optique entre polariseurs croisés.

16. - Fibres et rubans selon l'une quelconque des revendications 14 ou 15, **caractérisés en ce que** qu'ils sont fortement courbés de manière à former des noeuds ou à être tissées.

17. - Fibres et rubans selon l'une des revendications 14 à 16, **caractérisés en ce qu'**ils présentent un diamètre de 1 à 100 µm.

18. - Fibres et rubans selon l'une des revendication 14 ou 17, **caractérisés en ce que** lesdites particules sont des nanotubes de carbone composés d'un seul ou de plusieurs cylindres concentriques de graphite et/ou sont modifiés chimiquement par greffes de groupes chimiques.

19. - Fibres et rubans selon l'une des revendications 14 à 18, **caractérisés en ce qu'**ils possèdent une densité pouvant aller jusqu'à 1,5 g/cm3 environ.

20. - Fibres et rubans selon l'une des revendications 14 à 19, **caractérisé en ce qu'**ils comportent une enveloppe externe formée par le séchage périphérique, autour desdites fibres et rubans, de particules microniques ou nanométriques.

21. - Application des fibres et rubans tels que définis selon l'une des revendications 14 à 20 au renfort de matériaux à base de fibres, rubans ou câbles.

22. - Application des fibres et rubans tels que définis selon l'une des revendications 14 à 20 pour fabriquer des conducteurs, semi-conducteurs, isolants, en électronique ou en micro-électronique.

23. - Application des fibres et rubans tels que définis selon l'une des revendications 14 à 20 comme systèmes d'émission d'électrons notamment comme système d'affichage.

24. - Application des fibres et rubans tels que définis selon l'une des revendications 14 à 20 comme muscles artificiels ou comme actionneurs électromécaniques.

25. - Application des fibres et rubans tels que définis selon l'une des revendications 14 à 20 pour la fabrication de matériaux, tels que des textiles ou des câbles.

26. - Application des fibres et rubans tels que définis selon l'une des revendications 14 à 20 comme convertisseurs d'énergie mécanique en énergie électrique et réciproquement.

27. - Application des fibres et rubans tels que définis selon l'une des revendications 14 à 20 pour la fabrication de détecteurs chimiques et/ou d'électrodes.

## Claims

1. Method for obtaining fibres and strips from colloidal particles, **characterised in that**:
1) said particles are dispersed in a solvent optionally using a surfactant;
2) the dispersion obtained is injected through at least one orifice leading to a flow of an external solution, preferably having a higher viscosity than said dispersion, wherein the viscosities are measured under the same temperature and pressure conditions, so as to cause an aggregation of said particles into fibres or strips by destabilising the particle dispersions, and an optional alignment of said particles.

2. Method according to claim 1, **characterised in that** said particles are dispersed in an aqueous or organic solvent using a molecular or polymer, anionic, cationic or neutral molecular surfactant.

3. Method according to claim 1 or 2, **characterised in that** the external solution includes a viscosifier chosen from a polymer such as a polyol or a polyalcohol, in particular polyvinyl alcohol or cellulose, or a mineral such as clay.

4. Method according to claim 3, **characterised in that** a flocculant is added to the external solution, which flocculant is chosen from a polymer capable of causing bridging phenomena, a salt or a surfactant that is neutral or that has a charge opposite that of the agent used to disperse said particles, if it is ionic.

5. Method according to claim 4, **characterised in that** said polymer is constituted by polyvinyl alcohol.

6. Method according to claim 5, **characterised in that** the polyvinyl alcohol has a molecular weight greater than 10,000 and in particular between 10,000 and 200,000.

7. Method according to any one of the previous claims, **characterised in that** said fibres or strips are densified by capillary contraction, and/or said obtained fibres or strips are washed with a rinsing product so as to desorb said external solution and/or said surfactant.

8. Method according to claim 7, **characterised in that** said fibres or strips are extracted vertically from the rinsing product.

9. Method according to claim 7, **characterised in that** an annealing is performed on said fibres or strips at high temperature, in particular at a temperature above 400 °C, or at a moderate temperature, in particular at a temperature below 300 °C.

10. Method according to one of claims 7 or 8, **characterised in that** said fibres or strips are subjected to mechanical actions during said annealing processes, optionally with the addition of polymer and/or plasticizer.

11. Method according to any one of the previous claims, **characterised in that** the external solution comprises micron-scale or nanometre-scale particles for forming an external casing around said fibres or strips.

12. Method according to any one of the previous claims, **characterised in that** said dispersion solution is injected through at least one orifice having in particular a cross-section with a shape corresponding to the shape desired for the fibres or strips.

13. Method according to any one of the previous claims, **characterised in that** nanotubes, and in particular carbon nanotubes are implemented as colloidal particles.

14. Fibres and strips, **characterised in that** they are constituted by carbon nanotubes as colloidal particles.

15. Fibres and strips according to claim 14, **characterised in that** they have an anisotropic structure as demonstrated by optical microscopy between cross polarizers.

16. Fibres and strips according to any one of claims 14 or 15, **characterised in that** they are strongly curved so as to form knots or be woven.

17. Fibres and strips according to one of claims 14 to 16, **characterised in that** they have a diameter of 1 to 100 µm.

18. Fibres and strips according to one of claims 14 or 17, **characterised in that** said particles are carbon nanotubes composed of one or more concentric graphite cylinders and/or are chemically modified by chemical group grafts.

19. Fibres and strips according to one of claims 14 to 18, **characterised in that** they have a density capable of being up to around 1.5 g/cm3.

20. Fibres and strips according to one of claims 14 to 19, **characterised in that** they comprise an external casing formed by the peripheral drying, around said fibres and strips, of micron-scale or nanometre-scale particles.

21. Application of fibres and strips as defined according to one of claims 14 to 20 to the reinforcement of materials based on fibres, strips or cables.

22. Application of fibres and strips as defined according to one of claims 14 to 20 to produce conductors, semiconductors and insulators in electronics or microelectronics.

23. Application of fibres and strips as defined according to one of claims 14 to 20 as electron emission systems, in particular as a display system.

24. Application of fibres and strips as defined according to one of claims 14 to 20 as artificial muscles or as electromechanical actuators.

25. Application of fibres and strips as defined according to one of claims 14 to 20 to produce materials such as textiles or cables.

26. Application of fibres and strips as defined according to one of claims 14 to 20 for converting mechanical energy into electrical energy and vice versa.

27. Application of fibres and strips as defined according to one of claims 14 to 20 to produce chemical detectors and/or electrodes.

## Patentansprüche

1. Verfahren zum Erhalten von Fasern und Streifen aus kolloidalen Teilchen, **dadurch gekennzeichnet, dass**:
1) die Teilchen in einem Lösemittel gegebenenfalls mit Hilfe eines oberflächenaktiven Stoffs dispergiert werden,
2) die erhaltene Dispersion durch mindestens eine Öffnung, die in einem Strom einer externen Lösung mit einer vorzugsweise höheren Viskosität als die der Dispersion mündet, wobei die Viskositäten unter denselben Temperatur- und Druckbedingungen gemessen werden, derart gespritzt wird, dass eine Aggregation der Teilchen zu Fasern oder Streifen, indem die Dispersionen der Teilchen destabilisiert werden, und eine eventuelle Ausrichtung der Teilchen bewirkt werden.

2. Verfahren nach Anspruch 1, **dadurch gekennzeichnet, dass** die Teilchen in einem wässrigen oder organischen Lösemittel mit Hilfe eines molekularen oder polymeren, anionischen, kationischen oder neutralen oberflächenaktiven Stoffs dispergiert werden.

3. Verfahren nach Anspruch 1 oder 2, **dadurch gekennzeichnet, dass** die externe Lösung ein Verdickungsmittel umfasst, das aus einem Polymer wie einem Polyol oder einem Polyalkohol, insbesondere Polyvinylalkohol oder Cellulose, oder einem Mineral wie Ton ausgewählt ist.

4. Verfahren nach Anspruch 3, **dadurch gekennzeichnet, dass** der externen Lösung ein Flockungsmittel zugesetzt wird, wobei dieses Mittel aus einem Polymer, das dazu im Stande ist, Brückenbildungsphänomene hervorzurufen, einem Salz oder einem neutralen oberflächenaktiven Stoff oder einem oberflächenaktiven Stoff mit einer Ladung, die zu der des Mittels, das zum Dispergieren der Teilchen eingesetzt wird, entgegengesetzt ist, so dass dieses ionisch ist, ausgewählt ist.

5. Verfahren nach Anspruch 4, **dadurch gekennzeichnet, dass** das Polymer von Polyvinylalkohol gebildet wird.

6. Verfahren nach Anspruch 5, **dadurch gekennzeichnet, dass** der Polyvinylalkohol ein Molekulargewicht aufweist, das höher als 10000 ist und insbesondere zwischen 10000 und 200000 liegt.

7. Verfahren nach einem der vorhergehenden Ansprüche, **dadurch gekennzeichnet, dass** die Fasern oder Streifen mittels Kapillarkontraktion verdichtet werden und/oder die erhaltenen Fasern oder Streifen mit Hilfe eines Spülprodukts gewaschen werden, um die externe Lösung und/oder den oberflächenaktiven Stoff zu desorbieren.

8. Verfahren nach Anspruch 7, **dadurch gekennzeichnet, dass** die Fasern oder Streifen senkrecht aus dem Spülprodukt gezogen werden.

9. Verfahren nach Anspruch 7, **dadurch gekennzeichnet, dass** ein Tempern der Fasern oder Streifen bei einer hohen Temperatur, insbesondere bei einer Temperatur, die höher als 400 °C ist, oder bei einer gemäßigten Temperatur, insbesondere bei einer Temperatur, die geringer als 300 °C ist, vorgenommen wird.

10. Verfahren nach einem der Ansprüche 7 oder 8, **dadurch gekennzeichnet, dass** die Fasern oder Streifen während der Tempervorgänge mechanischen Vorgängen, gegebenenfalls mit einer Polymer- und/oder Weichmacherzugabe, unterzogen werden.

11. Verfahren nach einem der vorhergehenden Ansprüche, **dadurch gekennzeichnet, dass** die externe Lösung mikrometer- oder nanometergroße Teilchen enthält, um eine äußere Hülle um die Fasern oder Streifen zu bilden.

12. Verfahren nach einem der vorhergehenden Ansprüche, **dadurch gekennzeichnet, dass** die Dispersionslösung durch mindestens eine Öffnung gespritzt wird, die insbesondere einen Querschnitt der Form aufweist, die der für die Fasern oder Streifen gewünschten Form entspricht.

13. Verfahren nach einem der vorhergehenden Ansprüche, **dadurch gekennzeichnet, dass** als kolloidale Teilchen Nanoröhrchen und insbesondere Kohlenstoffnanoröhrchen eingesetzt werden.

14. Fasern und Streifen, **dadurch gekennzeichnet, dass** sie aus Kohlenstoffnanoröhrchen als kolloidale Teilchen bestehen.

15. Fasern und Streifen nach Anspruch 14, **dadurch gekennzeichnet, dass** sie eine anisotrope Struktur aufweisen, wie mittels Lichtmikroskopie zwischen gekreuzten Polarisatoren aufgezeigt wird.

16. Fasern und Streifen nach einem der Ansprüche 14 oder 15, **dadurch gekennzeichnet, dass** sie stark gebogen sind, so dass sie Schlingen bilden, oder gewoben werden.

17. Fasern und Streifen nach einem der Ansprüche 14 bis 16, **dadurch gekennzeichnet, dass** sie einen Durchmesser von 1 bis 100 µm aufweisen.

18. Fasern und Streifen nach einem der Ansprüche 14 oder 17, **dadurch gekennzeichnet, dass** die Teilchen Kohlenstoffnanoröhrchen sind, die sich aus einem einzigen oder mehreren konzentrischen Zylindern aus Graphit zusammensetzen und/oder mittels Aufpfropfungen von chemischen Gruppen chemisch modifiziert sind.

19. Fasern und Streifen nach einem der Ansprüche 14 bis 18, **dadurch gekennzeichnet, dass** sie über eine Dichte verfügen, die bis zu ungefähr 1,5 g/cm³ betragen kann.

20. Fasern und Streifen nach einem der Ansprüche 14 bis 19, **dadurch gekennzeichnet, dass** sie eine äußere Hülle, die mittels Trocknung der Außenfläche um die Fasern und Streifen gebildet wurde, aus mikrometergroßen oder nanometergroßen Teilchen aufweisen.

21. Verwendung von wie nach einem der Ansprüche 14 bis 20 definierten Fasern und Streifen bei der Verstärkung von Materialien auf Basis von Fasern, Streifen oder Seilen.

22. Verwendung von wie nach einem der Ansprüche 14 bis 20 definierten Fasern und Streifen zum Herstellen von Leitern, Halbleitern, Isolatoren in der Elektronik oder in der Mikroelektronik.

23. Verwendung von wie nach einem der Ansprüche 14 bis 20 definierten Fasern und Streifen als Systeme zur Elektronenemission, insbesondere als Anzeigesystem.

24. Verwendung von wie nach einem der Ansprüche 14 bis 20 definierten Fasern und Streifen als kunstliche Muskel oder als elektromechanische Stellglieder.

25. Verwendung von wie nach einem der Ansprüche 14 bis 20 definierten Fasern und Streifen zur Herstellung von Materialien wie Textilien oder Seilen.

26. Verwendung von wie nach einem der Ansprüche 14 bis 20 definierten Fasern und Streifen als Wandler von mechanischer Energie in elektrische Energie und umgekehrt.

27. Verwendung von wie nach einem der Ansprüche 14 bis 20 definierten Fasern und Streifen zur Herstellung von chemischen Detektoren und/oder Elektroden.
